# EUROPEAN PATENT SPECIFICATION

(11) **EP 2 503 826 B1**
(45) Date of publication and mention of the grant of the patent: **23.07.2014**
(21) Application number: 11159429.7
(22) Date of filing: 23.03.2011
(51) Int. Cl.: H04W 8/00

(54) **Method and wireless server device for selecting a wireless replacement server**
Verfahren und drahtlose Servervorrichtung zur Auswahl von einem drahtlosen Ersatzserver
Procédé et dispositif serveur sans fil pour la séléction d'un serveur sans fil de remplacement

(43) Date of publication of application: 26.09.2012
(73) Proprietor: BlackBerry Limited, Waterloo, ON N2K 0A7 (CA)
(72) Inventor: Eaton, Eric Thomas, Sunrise, FL Florida 33323 (US); Sibecas, Salvador, Sunrise, FL Florida 33323 (US); Shah, Viral Rajnibhai, Sunnyvale, CA 94086 (US)
(74) Representative: Moore, Barry

(56) References cited:
- EP-A1- 1 852 982
- US-A1- 2007 066 304
- US-A1- 2008 186 882

## Description

### FIELD OF DISCLOSURE

The disclosure provided herein describes generally to a method of selecting devices to communicate with another device (which may be operating as a node) in a network. In particular, the selection relates to identifying and managing interactions between "client" devices and a "server" device in a Wireless-Fidelity (Wi-Fi) network. The invention also relates to a wireless server device.

### BACKGROUND OF DISCLOSURE

Wireless mobile communication devices perform a variety of functions to enable mobile users to stay organized and in contact with others in a communication network through e-mail, schedulers and address books. Wireless devices are designed to enter and leave different wireless networks.

Wireless networks utilize communication hubs to communicate with the wireless devices. Some hubs provide access points to their networks as hard wired terminals. Wireless hubs are also available that have dual functions to maintain wireless connections for their associated devices in the network and to provide local functions for their user. Wireless hubs are typically battery powered. As such, efficient management of network connections by wireless hubs is important. Current systems do not manage connections efficiently. EP patent publication no. 1852982 discloses an access point multi-level power control system. U.S. patent publication no. 2007/066304 discloses an apparatus for connecting to a stable access point using connection history data.

### BRIEF DESCRIPTION OF THE DRAWINGS

Embodiments of the invention will now be described, by way of example only, with reference to the accompanying drawings, in which:
- Fig. 1A: is a schematic diagram of a wireless communication network having a wireless access point communicating with a wireless electronic communication device according to an embodiment;
- Fig. 1B: is a schematic diagram of a portion of the wireless communication network of Fig. 1A having the wireless access point communicating the networks shown therein according to an embodiment;
- Fig. 1C: is a schematic diagram of a portion of the wireless communication network of Fig. 1B having a second wireless access point communicating the networks shown therein according to an embodiment;
- Fig. 1D: is a schematic diagram of a portion of the wireless communication network of Fig. 1B where a network for the second wireless access point is established according to an embodiment;
- Fig. 1E: is a schematic diagram of a portion of the wireless communication network of Fig. 1B having a third access point communicating the networks shown therein according to an embodiment;
- Fig. 2: is a schematic representation of the wireless access point device of Fig. 1A implementing connection algorithms according to an embodiment;
- Fig. 3A: is a flowchart of exemplary processes executed by a first algorithm in the access point of Fig. 2 in seeking a clients for its network according to an embodiment;
- Fig. 3B: is a flowchart of exemplary processes executed by a second algorithm in the access point of Fig. 2 in transitioning to another access point according to an embodiment;
- Fig. 3C: is a flowchart of exemplary processes executed by a third algorithm of the access point of Fig. 2 in identifying a termination event according to an embodiment; and
- Fig. 4: is a block diagram of certain internal components of the device of Fig. 2.

### DESCRIPTION OF EMBODIMENTS

Exemplary details of embodiments are provided herein. The description which follows and the embodiments described therein are provided by way of illustration of an example or examples of particular embodiments of principles of the present disclosure. These examples are provided for the purposes of explanation and not limitation of those principles and of the disclosure. In the description which follows, like parts are marked throughout the specification and the drawings with the same respective reference numerals.

Briefly, an example provides systems, methods, processes and devices for managing connections for devices in a wireless network. An exemplary wireless network has a wireless transceiver communicating with wireless devices. The transceiver generates through its antenna a transmission area for sending and receiving wireless transmissions. Devices enter the transmission area and communicate with the transceiver. Communications are generally sent from one device to the transceiver and then the transceiver then sends the communication to the intended second device. Communications with other devices in other networks are channelled through the transceiver, which has connections to other transceivers and other servers in the other networks. In certain networks, some communications may be sent directly between devices in the area.

In a first aspect, a method of selecting a client device for a server device managing communications for a wireless network is provided. The method comprises: identifying a set of wireless devices that are communicating in the network; and identifying a set of client devices in the set of wireless devices to communicate with the network through the server device by evaluating members in the set wireless for their communication characteristics with the network.

For the method, the communication characteristics may include battery level and communication bandwidth characteristics.

In the method, identifying the set of client devices may further comprise evaluating the communication characteristics of the members against operating parameters of the server device.

The method may further comprise categorizing the set of client devices into groups, wherein each group contains members of the set of client devices that have a common parameter.

In the method, one group may contain members of the set of client devices that are allowed to connect to the network regardless of their communication characteristics.

In the method, identifying the set of client devices may further comprise evaluating the communication capabilities of the members to replace the server device.

In the method, the server may be a wireless communications device; and the operating parameters may include battery level and communication bandwidth capacities of the server.

In the method, the communication characteristics may include communication capabilities of the members with another network.

The method may further comprise if the server is determined to be disconnecting from the wireless network, then attempting to identify a replacement server for the server in at least the set of client devices.

In the method, the server may be determined to be disconnecting by evaluating calendar application data associated with the server.

In the method, the replacement server may have less reconnection events to the network than other clients in the set of client devices.

In the method, before disconnecting from the network the server may send a notification to the set of clients indicating that the server is disconnecting from the network.

In the method, the notification may include operating parameter and connection information about the server device.

In the method, the notification may include a message indicating an intent to leave the network as an access point by the server device.

In the method, the groups may be categorized based on communication characteristics to the server.

In the method, the communication characteristics may reflect an amount of data to be transferred between the devices and the server.

In the method, the communication characteristics may reflect a transmission distance between the devices and the server.

In the method, the network may be an 802.11-class network.

In a second aspect, a wireless communication device for processing communications directed to the device and to a plurality of external wireless devices in a wireless network is provided. The device comprises: a communication module to process communications of a plurality of devices communicating with the wireless device through the wireless network; an evaluation module to identify circumstances when the wireless device will be disconnecting from the wireless network; and a connection analysis module to identify a set of client devices from plurality of devices by evaluating communication characteristics for the network of the plurality of devices. In the device, if the evaluation module determines that the wireless device will be disconnecting from the wireless network, then the evaluation module provides an indicator to the connection analysis module; and upon receipt of the indicator, the connection analysis module attempts to identify a replacement device in the wireless network to process communications directed to the plurality of external wireless devices.

For the device, wireless network may be an 802.11 network.

In other aspects, various combinations of sets and subsets of the above aspects are provided.

In one configuration for the network, the transceiver and the devices have a "server/client" relationship, where the transceiver is the "server" device for the area and the wireless devices are the "clients". In some networks, the server may be a fixed device, such as a wireless router directly connected to a physical wired Ethernet port in a network. The server operates as a node for the network and channels communications from the client devices intended for other devices in the network through the server device, acting as a node. Other networks may have a non-fixed server, such as another wireless device. For the purposes of convenience, and not limitation, the term "fixed" is used herein to describe a device that typically is not mobile, typically has a physical connection to its network (e.g. through an Ethernet port) and typically is powered by a power connection to a utility network (through a power cord). The term "non-fixed" is used herein to describe a device that typically is mobile, typically makes a wireless connection to its network and other devices and typically is powered by a self contained power source (e.g. through a battery). The terms "server/clients" refer generally to devices that are related in some hierarchical network manner. Other terms may be used to describe comparable device relationships for an embodiment, such as "master/slave", "network node/client", "access point/clients", etc.

Generally, an example provides for a system and method for identifying and selecting a set of client devices for a given server in a communication network. For example, in a mobile hotspot Wi-Fi network, a mobile server (as an access point (AP) to the hotspot) can be provided. An embodiment can manage identifying an appropriate new AP when the current AP leaves the network, when there are changes in the associated communication link; and can make AP evaluations for different hotspot networks, since hotspots do not have equal operating characteristics. In a wireless network where a non-fixed server is provided, that server may be a wireless device. As such, the server wireless device may have limits on battery resources, wireless transmission / reception capabilities and processing capabilities that are not present in other fixed server devices. Features of an embodiment may be more relevant for a non-fixed server, but principles can be applied to a fixed server device. Features of an embodiment can be provided in a remote device, such as another server, that communicates with the servers and clients through the network.

By using identification and selection processes for an embodiment, a wireless network provides a dynamic set of client devices for a server. The set of client devices can be selected to reduce or minimize processing efforts (and therefore battery power) required by the server to maintain connections with its designated clients. Clients can be selectively added and/or deleted from a list of recognized devices for a server. The server itself may transfer its "server" responsibilities to another device. An embodiment provides processes to evaluate potential new server(s) and provides protocols for transferring "server" responsibilities to a newly selected server.

For fixed or non-fixed servers, an example provides three separate features that can operate independently of each other or in conjunction with one or more of the other features. First, an embodiment provides processes for identifying and selecting clients for the current server. Second, an embodiment provides processes for changing of a server designation from one transceiver to another. Third, an embodiment provides processes for identifying when a server requires a change from its server designation and provides remedial actions for its connected devices. Each of the three features is discussed below.

Before discussing more details on the three features, a description is provided on a network having a device, as a server, that provides connections to other devices, as clients, according to an embodiment. Then, detail is provided on an exemplary wireless device related to an embodiment. Then, further detail is provided on the first feature where client identification and selection algorithms are described that identifies and rank potential devices as clients for a server. Next, further detail is provided the second feature, where transfer algorithms are described that are responsible for managing transfer of "server" designations from one device to another in the network. Then, further detail is provided on the third feature where processing for managing termination conditions for a server are described.

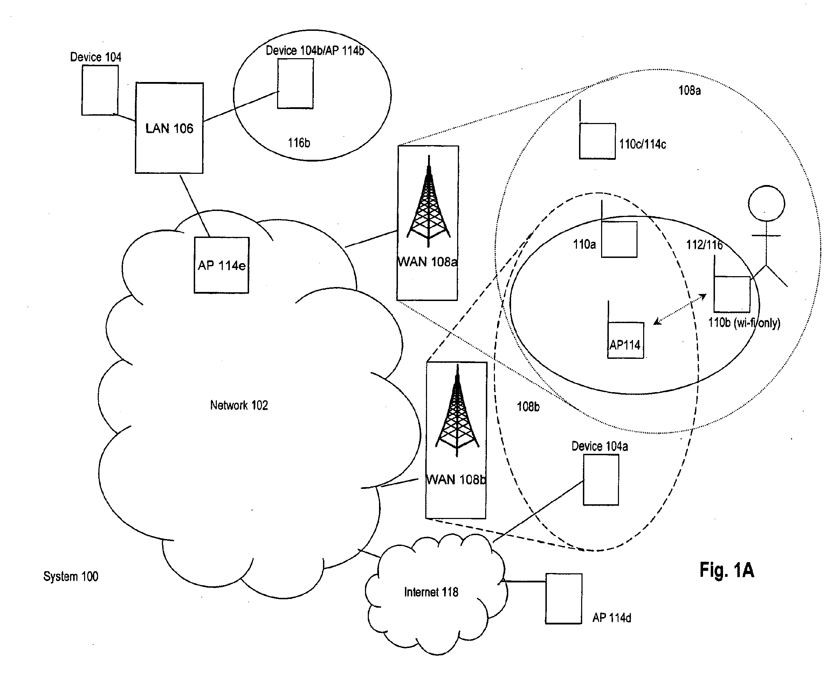

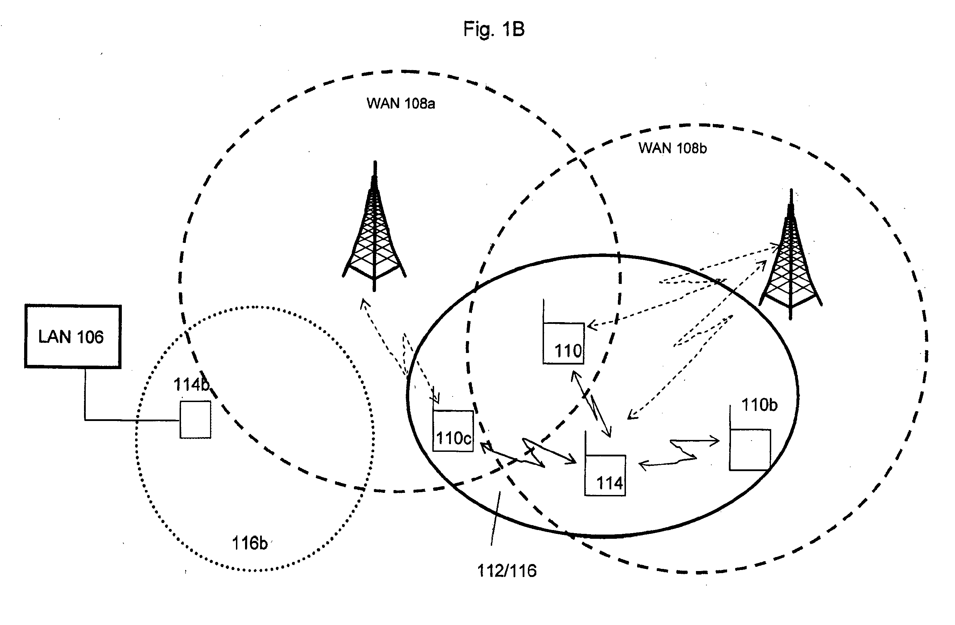

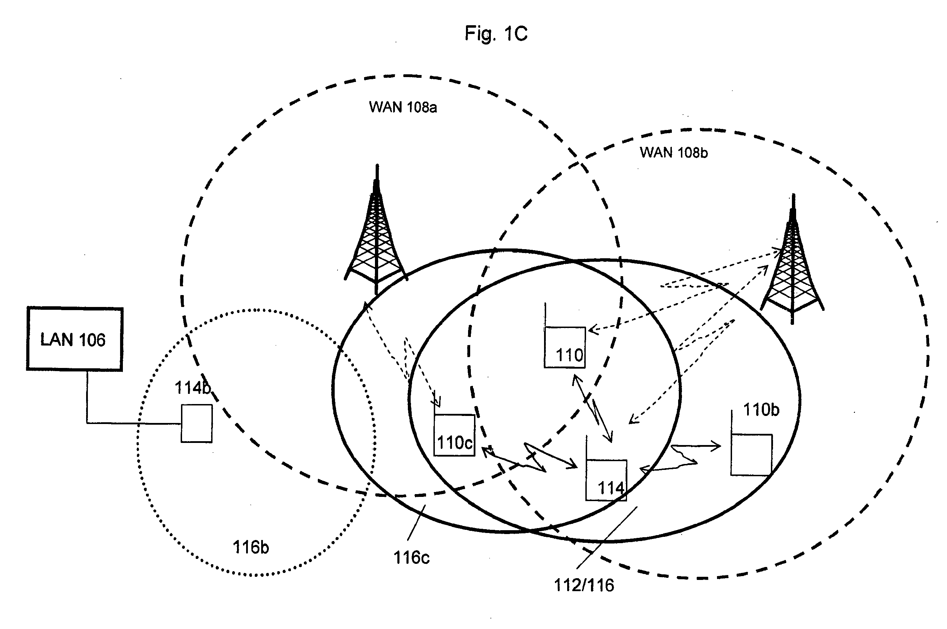

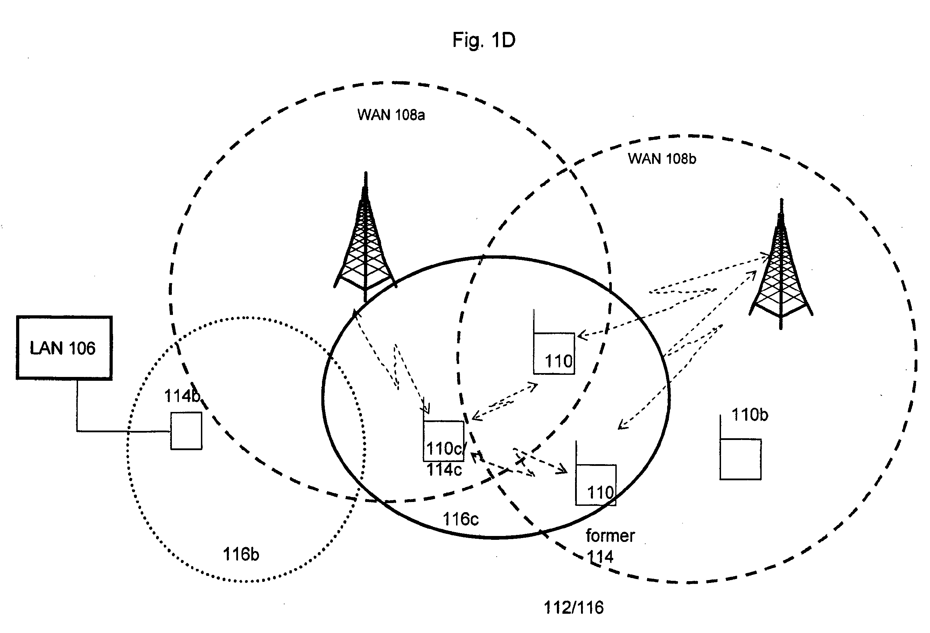

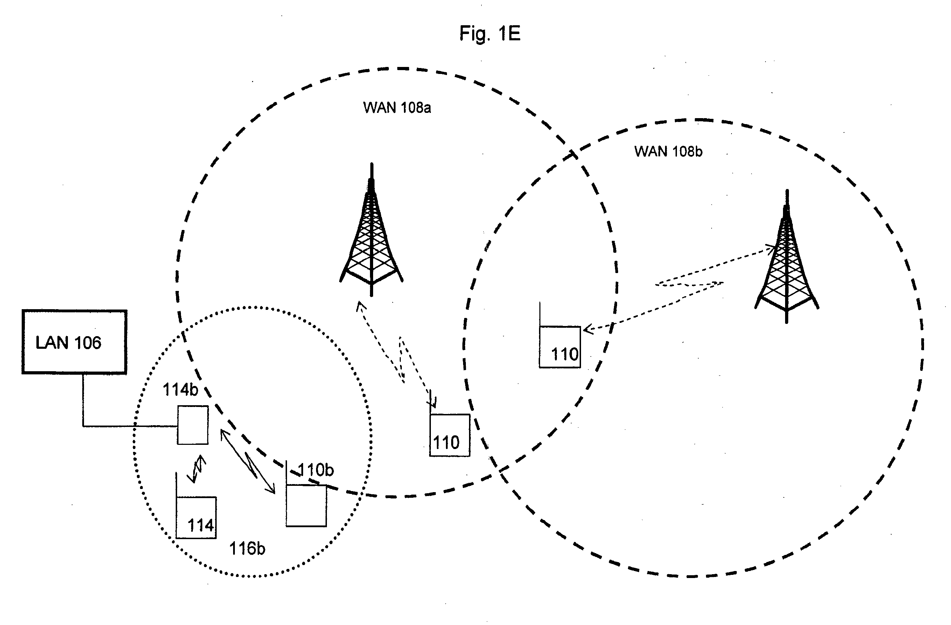

Referring to Fig. 1A, details on a system of exemplary networks and communication devices according to an embodiment are provided. Fig. 1 shows communication system 100 where network 102 provides access to a suite of applications, services and data to its connected devices 104 through its associated servers. Network 102 can be implemented in any known architecture, providing wired and/or wireless connections to its elements. It will be appreciated that in other embodiments, various networks and subnetworks as described herein may be incorporated into other networks.

In network 102, one or more interface servers (not shown) provide hardware and software systems to allow network 102 to communicate with other networks. As part of a typical network architecture, these networks are typically are organized following a layered model of network functions, such as an OSI model. As is known in the art, the OSI model defines seven layers where each layer controls functions of specific network/connection/applications. Some exemplary networks that are connected and connectable to network 102 are described.

Local area network (LAN) 106 is connected to network 102 and provides local wired and wireless connections to its devices 104 and 104b. Internet 116 may be connected to network 102.

Wide Area Network (WAN) is a wireless network that provides wireless communication coverage to devices 110 that are located within the wireless transmission area of the WAN. In Fig. 1, two WANs are shown, namely WAN 108a and 108b. Devices 110 have wireless communication capabilities with one or more wireless networks (described later). When the term "WAN 108" is used, it refers generically to a WAN network, which accordingly includes either WAN 108a, 108b or both. A particular WAN 108 may have multiple transmission areas by having multiple communication towers. A WAN network can be provided by a cellular communications company, such as Verizon (trade-mark).

Network 112 is a Wi-Fi network generally following standards set by the IEEE LAN/MAN Standards Committee, known as IEEE 802, through its working group "11". The 802.11 standard defines media access control (MAC) and physical (PHY) layers in the OSI protocol model for WLAN. The family of 802.11 amendments is sometimes referred to as the 802.11x family. Currently, the 802.11 amendments encompass six wireless modulation techniques that all use the same communication protocol among their communicating elements. Such networks are deployed in one or more of the five current versions of 802.11: 802.11 a, b, g and n, representing PHY amendments to IEEE 802.11. Other protocols are defined in standards covered by 802.1 aa/ad/ah/af specifications. Specific transmission details and parameters of these networks and channels are known to those of skill in the art.

Wireless devices 110 communicate with each other through the data link layer in network 112. In an exemplary environment, network 112 is a local, geographically small, wireless network. Wireless devices 110 include handheld devices, cell phones and computers (either desktop or portable) having a (wireless) network card, network adapter and/or network interface controller (NIC) installed therein.

Network 112 includes access point (AP) 114 and supporting radio transmission equipment known to those skilled in the art. In network 112, AP 114 contains an IEEE 802.11 radio receiver/transmitter (or transceiver) and functions as a bridge between network 112 and other networks (such as networks 102 and/or 108) for its carried communications. AP 114 provides data distribution services among devices 110 within network 112 and between devices 110 in network 112 and other devices in other connected networks. AP 114 may be a non-fixed wireless device, and as such AP 114 is effectively another wireless device 110. As AP 114 is the data distribution point for network 112, it will be seen that the transmission area 116 is centered around AP 114. As AP 114 moves (as it is a non-fixed device), its transmission area 116 for network 112 will move with it. If network 112 selects a different device 110 to become the new AP 114 for network 112, then the transmission area 116 will be defined by the transmission area covered by the new AP 114. Other APs may be used as bridges for other networks. For example, for LAN 106, device 104b / AP 114b provides a further AP for additional devices to connect to LAN 106 in transmission area 116b and AP 114e is provided as a bridge to network 102. Also, device 110c may have capabilities to be a Wi-Fi hotspot host and operate as AP 114c. For Internet 116, wired AP 114d is connected to Internet 118, providing an AP for devices to connect to Internet 118. Other devices communicating with AP 114d and its network are not shown.

For an 802.11 network, a "station" is a basic component in the network. A station is any device that implements the functionality of an 802.11 protocol and has a connection to the wireless network. Typically, the 802.11 connection and communication functions are implemented in hardware and software and may be provided in a network connection circuit or system in a NIC at the station. A station may be any device, including a laptop computer, device 104, wireless device 110, or an AP 114. Stations may be mobile, portable, or stationary. All stations support the 802.11 station services of authentication, deauthentication, privacy, and data delivery. For the purposes of an embodiment as it relates to 802.11 standards, devices 110 may be considered to be stations.

A service set (SS) is defined as all devices (or stations) associated with a specific local or enterprise 802.11 wireless LAN(s). A service set identifier ("SSID") is a unique 32-character network name, or identifier, that is created and associated with a particular WLAN 110. A basic service set (BSS) is defined a single access point with all its associated stations. An Extended Service Set (ESS) is a set of one or more interconnected basic service sets and associated local area networks.

It will be appreciated that networks may have overlapping transmission areas, as shown with networks 108a, 108b and 112. As such, devices that are physically within transmission areas for overlapping networks can receive separate communications from each network. For example, network 108a can communicate with devices 110a, 110c and AP 114. Device 110b is Wi-Fi only for this embodiment and as such, while it is within the transmission range of network 108a, it can only communicate with network 112. Network 108b can communicate with devices 104a, 110a and AP 114. Network 112 is defined by AP 114 and as such, AP 114 can communicate with devices 110a and 110b. Notably, AP 114 can operate as a communications node for network 112 thereby being the communications point for network 112 with networks 108a, 108b and other networks.

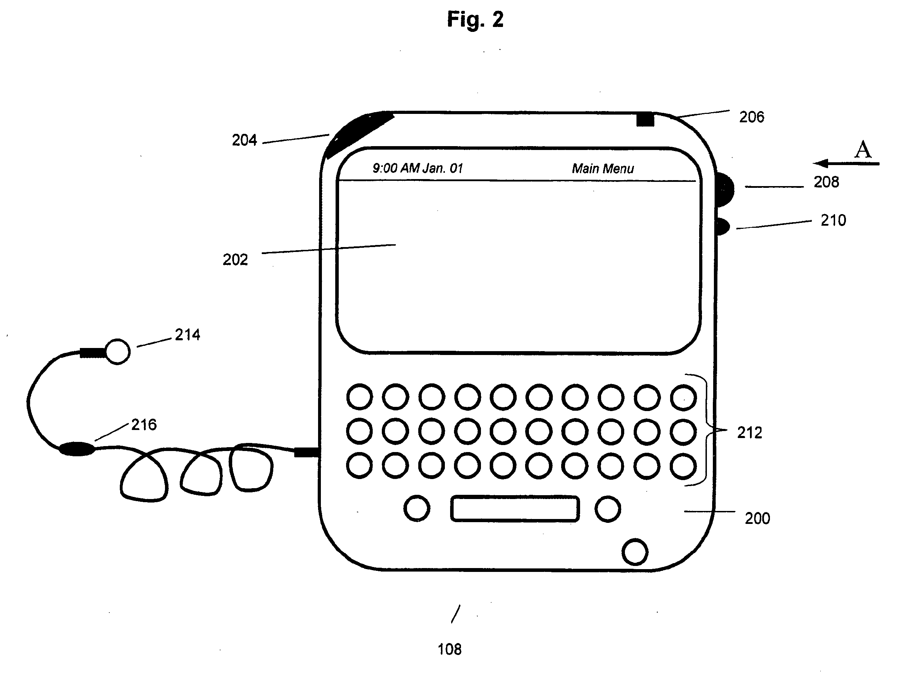

Now further detail is provided on AP 114 in network 112. Fig. 2 provides general features of AP 114 (and/or device 110) in accordance with an embodiment of the disclosure. In the present embodiment, AP 114 / device 110 is based on a computing platform having functionality of an enhanced personal digital assistant with cellphone and e-mail features. It is, however, to be understood that AP 114 / device 110 can be based on construction design and functionality of other electronic devices, such as smart telephones, desktop computers, pagers or laptops having telephony equipment. In a present embodiment, electronic device 110 includes housing 200, display 202 (which may be a liquid crystal display - LCD), speaker 204, LED indicator 206, input device 208 (which may be a trackpad, a trackball a key or another device), an ESC ("escape") key 210, keypad 212, a telephone headset comprised of an ear bud 214 and a microphone 216. Input device 208 and ESC key 210 can be inwardly depressed along the path of arrow "A" as a means to provide additional input to AP 114 / device 110.

It will be understood that housing 200 can be made from any suitable material as will occur to those of skill in the art and may be suitably formed to house and hold all components of AP 114 / device 110.

AP 114 / device 110 is operable to conduct wireless telephone calls, using any known wireless phone system such as a Global System for Mobile Communications (GSM) system, Code Division Multiple Access (CDMA) system, wireless CDMA, CDMA 2000 system, Cellular Digital Packet Data (CDPD) system and Time Division Multiple Access (TDMA) system. Other wireless phone systems can include Wireless WAN (IMS), Wireless MAN (wi-max or IEEE 802.16), Wireless LAN (IEEE 802.11), Wireless PAN (IEEE 802.15 and Bluetooth), highspeed data packet access (HSDPA) networks, etc. and any others that support voice. Additionally, a Bluetooth network may be supported. Other embodiments include Voice over IP (VoIP) type streaming data communications that can simulate circuit-switched phone calls. Ear bud 214 can be used to listen to phone calls and other sound messages and microphone 216 can be used to speak into and input sound messages to AP 114 / device 110.

AP 114 / device 110 is a microprocessor controlled device (not shown). Software applications operating on AP 114 / device 110 control its operations and network connections to implement the three features. Further detail on selected applications for an embodiment is provided later.

Now, with some basic components of network 112 and AP 114 disclosed, the first feature of an embodiment is described in more detail, where processes for identifying and selecting devices 110, as clients, for a given AP 114 are described.

As AP 114 is a wireless device 110, it is generally powered by its internal battery and typically does not have a power connection to a tradition 120 volt power network. As such, special operating considerations are required for wireless AP 114 as it is preferable that AP 114 operates in a manner to conserve its battery power. AP 114 may have a slower and variable data transmission rate with its devices 110. This may be due to the transmission signal strength generated by AP 114 and its ability to extract received signals from devices 110 and network 112. As wireless AP 114 is a device 110, it is possible that AP 114 may be turned off, thereby possibly eliminating network 112. Wireless AP 114 preferably independently maintains its other existing non-AP functions (e.g. wireless transmissions for its communications, global positioning system (GPS) information, local applications, etc.).

AP 114 may operate as a dual-mode modem. Its telephone functions allow it to make WAN connections and allow it to deliver voice and e-mails to user of AP 114. Its Wi-Fi connections (acting as a server) enable delivery of data to other devices 110 (e.g. a remote wireless device) simultaneously.

Since wireless AP 114 is portable, it may move. As such, its wireless coverage for area 112 and devices 110 are dynamic, each independently potentially ranging from non-existent, to poor, to adequate, to good and to excellent (with values in-between). As such, overall throughput between wireless AP 114 and device 110 can depend on an instantaneous wireless signal quality of two PHY layers, namely a Physical Coding Sublayer (PCS) and a Physical Medium Dependent (PMD) layer. The PCS encodes and decodes the data that is transmitted and received.

In order to conserve battery power for wireless AP 114, an embodiment may impose a limit on the number and/or types of devices 110 that are permitted to connect to its network 112. By having a limit on the number of devices, wireless AP 114 has a defined ceiling on the number of scans that it performs for maintaining connections to its connected devices 110, thereby conserving processing cycles and battery power. The boundaries of a limit for the number of devices can be based on any set of parameters. One limit can be a static number. Another limit can be dynamically set depending on the current operating characteristics of AP 114. For example, one factor for devices 110 is their physical proximity to AP 114. The closer device 110 is to AP 114, the better the chance that communications are carried with strong signals, which may reduce the need for multiple re-transmissions and reconnections.

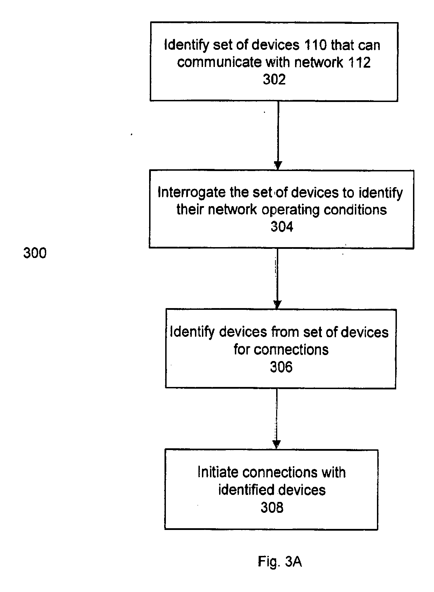

Referring to Fig. 3A, process 300 shows an exemplary connection analysis algorithm operating on AP 114 (or for it) that identifies and selects devices 110 as client devices that are to be connected to network 112 through AP 114.

To begin, process 302 identifies a set of devices 110 that AP 114 currently can or does communicate with in network 112. This process will include AP 114 initiating a device scan for Wi-Fi AP and determining if it needs to be or should be a mobile hotspot. If AP 114 determines that it should be a hotspot then it can initiate a broadcast announcing that it is a hotspot. Once devices 110 see the new mobile hotspot they may request access via the standard Wi-Fi protocol. The hotspot will validate which subset of devices is allowed to attach to the hotspot after evaluating operating parameters and security conditions. An embodiment can advise AP 114 that it does not need to become a mobile hotspot if it does not wish to become the hotspot. For example, if another hotspot is already operating, then AP 114 may itself determine that it should attach to the hotspot.

Next, at process 304, AP 114 can interrogate the identified devices 110 that pass an initial security comparison to determine their network communication characteristics, including for example, their operating conditions and/or communication characteristics for network 112. For an identified device 110, exemplary conditions/characteristics can include one or more of the following parameters:
- Its current power connectivity and/or battery capacity. The analysis may identify a particular power connected for device 110. For example, the analysis may reveal that device 110 is configured to have full-time AC power connection to the main utility power system or to have a battery with a sufficient charging level to communicate with AP 114. In this context the device should have a reliable power source and is worth adding to the network. Device 110 may not need to be Wi-Fi connected to AP 114 if it has alternative connections to network 112;
- Desired/required data transmission rate, transmission power levels and type of connection;
- Expected transmission/bandwidth usage for a connection (e.g. web browsing, streaming video, file down load, etc.);
- Setting of any "preferred" devices 110 (see below). A list of MAC address of preferred devices may be stored and/or accessed by AP 114. In this case the MAC address is provided to AP 114 and is just compared to a pre-existing list in AP 114;
- Settings associated with its MAC address (or other connection address). A MAC address analysis (or other analysis) may identify certain characteristics of connection(s) for the devices 110. For example, the MAC address can be examined and the associated manufacturer may be identified. This data (and others) can be used to provide some decision information and initial assumptions about the device, power configuration, expected frequency of transmission requests, etc.;
- Expected maximum/minimum/desired connection time (e.g. 5/10/15/45/60/120+ minutes). The connection time may be based on a reference starting time;
- Other connectivity data (e.g. device 110's relationship to AP 114. For example, a device 110 may be labelled as a "friend", "family member", "work mate", "stranger" etc., to the AP 114 which may be stored in AP 114 and/or device 110);
- Operating parameters of AP 114 (e.g. AP 114's available communication bandwidth, its current battery supply levels, its current availability schedule(s), etc.);
- Relationships with other devices 110; and
- Other criteria relating to a network connection, processing capabilities of device 110, current activity schedules and/or other factors.

At process 304, the suite of condition data is evaluated. The data can be scored and weighted on a per-device basis. AP 114 (or its proxy) may assess the determined scores against a set of thresholds to determine a set of identified devices 110 that potentially can be allowed to join its network 112. Selection of devices 110 may also be manually provided, where on display 202 (Fig. 2) of AP 114, a graphical user interface (GUl) lists of discovered devices 110 and a user of AP 114 is permitted to select devices 110 to be associated with network 112.

To provide additional evaluation parameters, process 304 can define groups for devices 110. Therein, sets groups are defined with each group defining devices 110 that have at least one common parameter and/or trait. Wireless AP 114 may evaluate each group to determine whether what type of access its members, as a group, should have to network 112. For example, the group members may be permitted or denied access. Also, the members may have their privileged changed. Individual membership in a group by its devices can be periodically re-evaluated and adjusted as needed. One embodiment categorizes the devices into the following exemplary groups: preferred, powered, regular and excluded:
- **Preferred devices** may not be required to have any operating criteria, other than having a proper network connection. Such device may have network connections (e.g. Wi-Fi connections) that are not dependent on energy consumption (i.e. battery levels), bandwidth requirements or minimum proximity to AP 114. Preferred devices can be identified via analyzing their MAC address.
- **Powered devices** are generally in sufficiently close proximity to AP 114 and may be connected to a main power source (e.g. by a 120 V AC connection) and/or may have a battery that has a charge that exceeds a threshold (e.g. the batter is nearly fully charged battery and/or the battery has a higher capacity than AP 114. "Sufficiently close" is a physical limitation of the Wi-Fi physical layer. This would be determined by requesting information from the device over the Wi-Fi network.
- **Regular devices** may be any device 110 (e.g. a cellular phone or a device with Wi-Fi and/or 3G/4G connectivity); and
- **Excluded devices** may be any device (including a powered device) that requires a large amount of transmission bandwidth or is separated from AP 114 by a distance exceeding a threshold. Excluded devices have operating conditions/connection requirements with AP 114 that have greater processing requirements for AP 114 than devices in other groups. As such, in order to conserve the battery of AP 114, these devices are not allowed to connect to AP 114. Exceptions to excluded devices may be provided. For example, a preferred device that still has a condition to make it an excluded device may still be granted a connection to AP 114 if an alternative connection can be established at a data rate satisfying its requirements.
More or less groups can be provided, having different characteristics. Devices may be categorized into one or more groups (or no groups). When a device is in multiple groups, an evaluation matrix can be established for the device's memberships in the groups to determine its ultimate group placement. A characteristic of a group may be devices that are allowed to connect to a network, such as network 108 or 112, regardless of their communication requirements. For example, the requirements may be made regardless of their bandwidth, connection time, connection distance, data rate requirements and/or other requirements.

Next at process 306, whether detected devices 110 are categorized in groups or not, characteristics of devices 110 are analyzed to produce an ordered list of devices that potentially can be provided with a connection to AP 114. The selection of devices 110 attempts to optimize both overall average data throughput and average energy consumption for devices 110 and AP 114 in network 112. The actual number of devices 110 that are granted a connection may be limited, due to processing constraints at AP 114. As such, not all devices 110 that request a connection to AP 114 may be granted access, even though the devices may meet initial connection criteria. Devices that are provided connectivity are tracked in a connected list. Devices 110 that meet connectivity requirements, but nonetheless are not provided a connection (e.g. due to numeric connection limits), may be tracked in a separate, waiting list. The devices in the waiting list may be ranked and prioritized; such rankings may be ascertained by checking any condition flags for these devices (e.g. having a "preferred" status may be selected before other devices that do not have that flag). Alternatively, the list may be simply devices that are included in one or more of the above noted groups (e.g. preferred, powered and regular devices).

Devices that are denied connectivity may be tracked in an excluded list. Such excluded devices may have a deemed inappropriate performance issues (e.g. requirements for too large amount of bandwidth, or is beyond a threshold distance from wireless AP 114, etc.). Such devices 110 may cause additional overhead communications to be sent between them and AP 114, thereby occupying resources (and using battery capacity) of wireless AP 114. In one configuration, a particular an over-ride condition may be established to affirmatively include or exclude a device 110 from the connected or waiting lists. For example, in one configuration, a device 110 may be listed on the connected list if its parameters indicate that it can establish a connection with network 112 at a data rate meeting requirements set within its operating parameters.

At process 308, once the list of connected devices is determined formal network commands are sent between selected devices 110 and AP 114 to establish connections to network 112. It will be appreciated that contents of any list, in particular the connected list, is dynamic. If a device 110 leaves or drops from network 112, AP 114 may identify one or more replacement devices 110 to join network 112. The replacement device 110 may be selected from the waiting list (presuming other minimum criteria are still satisfied).

The above noted aspects may be processed either at AP 114 or through a remote server (not shown) connected to network 112. Commands to configure and/or reconfigure members in list of clients for a designated AP may be provided by AP 114 or remotely.

As such, the first feature of an embodiment provides the following functions and/or benefits:
- Analysis of performance/communication characteristics of potential devices 110 as clients for AP 114/network 112, which facilitates optimal selection of clients having regard to overall average data throughput and average energy consumption of the clients, as a whole, for network 112;
- Classification of potential devices 110 into groups, which may include an analysis of additional information (friend, family member, etc.);
- Over-ride settings to expressly allow a client to join/be excluded from network 112;
- Analysis of an energy load of a potential clients for network 112, which may include a distance and data size factors; and
- Manual override classification settings for clients.

Now, the second feature of an embodiment is described in more detail. In particular, details are provided on how an embodiment changes a designated AP in network 112 from a current AP 114 to other devices 110.

As previously noted for Fig. 1A, networks may have overlapping transmission areas, as shown with networks 108a, 108b and 112. As AP 114 for network 112 is mobile, its transmission area 116 changes. Also, as it moves, its proximities to other networks, such as networks 108a and 108b, may also change. As AP 114 moves, its communication capabilities with different networks 108 may independently be improved or worsened. As such, for network 112, an embodiment attempts to maintain device continuity of its ESS and attempts to maintain a given network throughput level with one or more networks.

One exemplary method of maintaining and managing connections for an AP is to periodically evaluate whether network 112 itself should be terminated and whether a replacement AP for AP 114 should be identified. The replacement AP would have its own network/transmission area associated with it. The evaluation may determine whether or not a replacement AP should be implemented. To do so, an embodiment monitors and manages connections for possible replacement APs 114 to replace network 112. Performance characteristics of potential APs to replace the current AP 114 are periodically evaluated in view of its devices 110 and/or connections to other networks. Depending on the evaluation, a current AP 114 may initiate instructions or be instructed to transfer its AP responsibilities to a second device 110 in the ESS, thereby promoting the second device 110 to replace AP 114. If a replacement AP is identified, then network 112 is effectively discontinued and a new network with its new transmission area is created. That second device 110 may be physically closer to one or more networks 108 than AP 114 thereby providing better communication links to those networks 108.

The AP evaluation may occur at predefined times and/or events. For example, the AP (acting as the server) may be programmed to start and/or terminate a connection to network 112 at a predetermined time and/or upon a predetermined event. Transfer of server responsibilities may be provided to one or more devices, including to fixed AP 114b for network 112. Server responsibilities may include identification of clients and categorizing of same in network 112 and providing network status updates to its clients, including changes of status of the server. Network messaging protocols can define how status information on AP 114 and devices 110 are polled, gathered and analyzed. Messages can include status information such as identification of the current members in network 112, timing of any handovers from AP 114 to other APs and/or hotspots, and requirements for new APs. In network 112, AP 114 manages the connections and messaging for its devices.

In other network configurations, where permitted, a current AP 114 may transfer its responsibilities to another device 110 which can then effectively take over network 112, where the selected device becomes AP 114.

As previously noted, wireless AP 114 provides two mostly independent functions: at a network level, it manages connections to network 112 for devices 110 as clients; at a local level it manages its own applications. For a given network 112, there may be several AP 114s, with each AP self-declaring itself as a server for that network. A user of a device 110 may manually assign his device 110 to be the server for network 112 and act as AP 114, where this election is provided through a selection in a GUl locally created on its device. Alternatively a network operator process for network 112 may remotely activate device 110 to be the server. AP 114 can then determine, as noted earlier, a set of devices 110 to be its clients for the ESS. For clients, devices 110 may individually request which server AP 114 that it wishes to be associated with as its client. A device may be associated with one or more APs 114 as servers.

Figs. 1B-1E illustrate exemplary AP transitions conducted by an embodiment as AP 114 moves.

In Fig. 1B, WANs 108a and 108b are shown with network 112 defined by AP 114. Here, transmission regions for WANs 108a and 108b overlap with transmission area 116 for network 112. In WLAN network 112, Wi-Fi only device 110b can only communicate with Wi-Fi AP 114 (and cannot communicate directly with WAN 108b). Devices 110, 110b and 110c communicate on Wi-Fi network 112 with AP 114 (and device 110b). Devices 110, 110c and AP 114 (but not device 110b) can also communicate directly with WANs 108a and 108b. LAN 106 is shown with its wired AP 114b defining transmission area 116b.

In Fig. 1C, another WLAN hotspot network is provided having transmission area 116c, which is controlled by device 110c. It can be seen that AP 114's coverage area 116 differs from area 116c. As an example, an AP 114 can conduct an evaluation for a replacement AP. Transmission characteristics for devices 110 to network 112 and to WANs 108a and 108b may be evaluated. The better device 110 that has better transmission characteristics to one or more of networks 108a, 108b and/or 112 may be selected as the AP to replace AP 114. Once identified, the selected device 110 becomes the replacement AP 114 and former AP 114 may relinquish some or all of its AP functions and shut down its hotspot providing coverage 116. In one analysis, AP 114 may determine that device 110c has superior communication connections than AP 114, because device 110c can communicate with both WANs 108 and 108b, whereas AP 114 can only currently communicate with WAN 108b.

Referring to Fig. 1D, AP 114 has determined that it should shut down its network 112 and should contact device 110c to establish a new hotspot with its coverage area 116c. As such AP 114 communicates to device 110c to advise that former network 112 is being discontinued. In response, device 110c becomes AP 114c and communicates over its Wi-Fi network having coverage 116c with device 110.and former AP 114 (now operating as device 110). In this configuration device 110b has lost its Wi-Fi connection to AP 114 and is outside of area 116c, so it cannot communicate with that network.

In Fig. 1E, AP 114 has moved to be within transmission area 116b for LAN 106. As noted, a fixed WLAN network is provided through AP 114b defined by area 116b. Wi-fi only device 110b can communicate with either AP 114 or AP 114b. Since AP 114b is a wired device, generally, it may have superior communication transmission capabilities and superior battery life than AP 114. As such, an embodiment may evaluate possible alternatives to AP 114 and determine that AP 114d should replace the AP functions of AP 114. As such both AP 114 and device 110b are instructed to use AP 114d as the replacement AP for the fixed WLAN. At the same time, AP 114d assumes AP responsibilities for AP 114 and device 110b.

For an AP transferral assessment, characteristics, capabilities and requirements of devices 110 and AP 114 are obtained and analyzed to determine whether an AP transfer should be performed, and if so, transferral to which device 110, if any.

Each device 110 as a client in the ESS with WAN connectivity measures and reports to AP 114 connectivity performance data, such as its received WAN power level signals, Wi-Fi transmitted/received power levels from adjacent devices 110 in the ESS, its processor capacity and its battery capacity. This data is typically gathered by and stored at AP 114. Meanwhile, AP 114, as the current server for the ESS, determines a server stability factor for each device 110 connected to it as a client. This factor is based on any one or more of various factors, such as the number of times a given client has left and reconnected with the ESS and on data providing future expected availability of the server. As such, a set of possible replacement servers can be determined from clients that have no more than a maximum number of reconnection events. The maximum number may be changed. Similarly, the "best" replacement server(s) may be identified as the client(s) that has/have the least number of reconnection events. The availability of the server/clients may be determined from application calendar data associated with AP 114 or other data or indicia indicating the expected availability of AP 114.

In one example, clients may be selectively blocked from accessing network 112 when AP 114 terminates its connection. Local security or access control parameters (e.g. parental control parameters) for a particular device 110 may be imposed to limit connection/reconnection capabilities of device 110 to network 112. For example device 110 may have a restricted set of devices 110 that it will recognize as an AP 114 for network 112. Network access for device 110 may be remotely terminated by AP 114 (e.g. a secondary PHY connection through Wi-Fi may be terminated). Access may be re-established after a predetermined event and/or passage of time. Network access for device 110 may be remotely re-activated by AP 114 (or another device 110) through a message/command provided to it.

Other general operating conditions of network 112 may be considered together (weighted accordingly) or separately.

Based on the connectivity data received from each client, the AP's stability factor, and any other relevant factors, the current AP 114 (or its proxy), as the server, can evaluate these factors and then determine if one of devices 110 (as clients) in the ESS may be in a better position to become the server for network 112 instead of AP 114.

As several factors are involved, the analysis can produce a matrix of possibilities for a proposed transfer. For example, if the connectivity data indicates that another device 110 has superior connectivity data that AP 114, then this supports transferral of the server designation. If the stability factor indicates that AP 114 is scheduled to be out of service (as a calendar entry indicates a busy period) and/or that another device has a recent history of not leaving the ESS, then this also supports transferral of the server designation. Once a determination is made that a transfer should be implemented, a further analysis can be conducted to identify an appropriate list of current clients that are candidates to become the new server.

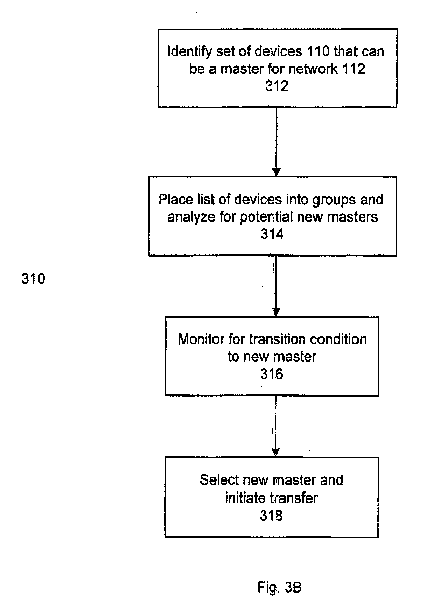

Referring to Fig. 3B, process 310 shows an exemplary AP transition processing algorithm operating on AP 114 (or for it) that determines whether an AP transfer should be performed.

Akin to features provided in the client selection features noted in Fig. 3A, first at process 312 a list of potential new servers is identified. This process may be initiated when it is determined that AP 114 (as the server) will be discontinuing its services for network 112. Such a determination can be made by analyzing availability data, such as calendar application data associated with AP 114.

Next, in process 314, members in the list can be placed into groups and/or an evaluation matrix can be established and applied to determine which devices 110 are the most preferred alternative server(s). Various criteria may be used to determine preferred alternatives, such as identifying possible alternatives that have less reconnection events to network 112 than other clients in the group and/or evaluating communication capabilities of devices 110 to replace AP 114 as the server for network 112.

Next, in process 316, an evaluation may be performed on a periodic basis or on a trigger basis (which may be determined by a condition detected in network 112, in current AP 114 or in any device 110). The above noted aspects may be processed either at AP 114 or through a remote server (not shown) connected to network 112. Commands to configure and/or reconfigure members in list of clients for a designated AP may be provided by AP 114 or remotely.

Next in process 318, once a determination is made that a new server for network 112 is required and a new server from devices 110 is selected and/or confirmed, network 112, AP 114 and selected device 110 (as the designated new server) exchange messages, commands, replies and data to install selected device 110 as the new server (i.e. new AP 114) to establish a new network in place of network 112 and to uninstall former AP 114 as the server. Exemplary commands/notifications issued by AP 114 for an embodiment relate to a change in status of network 112 and/or AP 114. These include commands to activate/deactivate its current hotspot, thereby effectively terminating network 112, initiating notifications to advise of an AP termination, and other commands/notifications. Once former AP 114 transfers its network responsibilities to new server 110, former AP 114 can revert to being a device 110 in network 112.

As such, the second feature of an example provides the following functions and/or benefits:
- Identification of operating parameters of AP 114 and evaluation of the parameters to identify disconnect conditions for AP 114 from network 112;
- Identification of potential device(s) 110 to become a new AP 114, based on an analysis of the client(s)'s capabilities;
- Ability to transfer of AP 114 responsibilities to one or more devices 110 in the ESS; and
- Ability to identify a preferred candidate for the new AP 114 through an analysis of signal quality and overall average data throughputs in multiple wireless protocols and battery consumption factors.

Now, the third feature of an example is described in more detail. Relating to identifying and determining whether a new server should be sought for network 112, an embodiment also provides facilities to assess whether and when a current AP 114 should transfer its network management responsibilities and/or report changes to devices 110 (as clients). Such facilities include managing timing of termination of AP functions by an AP 114 in an ESS.

Since AP 114 is also device 110, AP 114 can make WAN connections, deliver voice and e-mails to AP 114 and provide Wi-Fi connections to other devices 110. Notably, it is possible for a connection managed by an AP 114 to be terminated while maintaining other connections and vice versa. For example, wireless AP 114 may selectively deactivate local communication features (e.g. phone services) while maintaining other network connections (e.g. to network 112 and/or 1108, to the Internet, etc.) or vice versa.

Occasionally, network and local responsibilities for AP 114 may conflict with each other. For example, at a given time of day, the user of wireless AP 114 may need to turn off WAN connectivity for wireless AP 114, but maintain connections for voice and e-mail systems. As such, ESS network functions would be terminated, but local network functions to AP 114 (as a device 110) may be maintained. Such terminations may be initiated on a detected condition (e.g. where AP 114 roams to another network) and/or as an automatically scheduled event (e.g. through its calendar application or through other network control applications) or manually initiated by a user of wireless AP 114 through a GUI operating on AP 114.

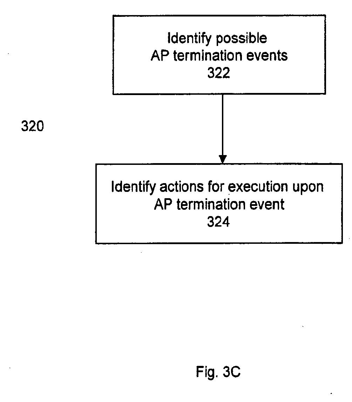

Referring to Fig. 3C, process 320 shows an exemplary AP evaluation algorithm operating on AP 114 (or for it) that determines when an AP termination event is pending.

In process 322, in order to identify situations where a change in network control may be warranted for AP 114, the process identifies potential session termination events and/or related times. This may be done by determining the current operating parameters of AP 114, evaluating calendar application data of AP 114, and/or evaluating other conditions/status indicators for AP 114 and/or network 112. Then, in process 324, the algorithm provides appropriate inoculation/recovery actions and/or warning messages to related devices, such as clients in the ESS.

For process 322 in one example calendar application data on AP 114 is evaluated to determine network availability windows for AP 114. If the process determines, after interrogating its calendar data (and/or other data), that AP 114 will be disconnecting from or leaving the ESS at a given instance, then the process can initiate a transfer process to pass the server designation and its tasks for network 112 to one of the clients (i.e. devices 110) in the ESS. Other evaluations on the status of AP 114 can be performed by examining current operating data of AP 114, which can include status information on devices 110 in network 112, provided through network messages between AP 114 and devices 110. Calendar data may include a specific network status flag that indicates whether or not access to network 112 is to be maintained, terminated and/or suspended.

Next, for process 324, AP 114's availability data (through its calendar data and other data) is analyzed to determine the availability of AP 114 to network 112, which may provide a maximum window of time left that in the current ESS. As noted, network 112 effectively exists as long as AP 114 is operating as an AP. As such, when AP 114 ceases to act as an AP, network 112 effectively ceases to exist. Conditions for that cause AP 114 to stop acting as an AP may be determined by its availability data (e.g. through its calendar application data) or through a predefined triggering event (e.g. passage of certain deadline, change in location, etc.). If the availability data indicates that AP 114 will be disconnecting or leaving network 112 before expiry of the current ESS session, then process 324 can initiate a hand-over process of tasks associated with a server for AP 114 to a client in network 112 (namely another device 110). Process 324 may identify a new server based on an analysis provided for changing APs as described above. In an alternative embodiment multiple new servers may be identified and the current tasks of AP 114 may be divided among the new servers. Tasks may be divided among the new servers by assigning relevant tasks to the device that has the best capacity to process same. If the analysis determines that no other device 110 in the ESS is capable of becoming the next server for network 112, then process 324 may take remedial action, which may include sending a warning message to clients (namely other devices 110) in the ESS. Upon receipt of the warning message, each client can independently initiate local remedial actions either to disconnect itself from network 112, seek another connection to network 112 and/or gracefully shut down local applications (or parts thereof) that utilize connections to network 112.

As noted above, AP 114 provides dual mode communications (e.g. WAN/cellular and Wi-Fi). As such, AP 114 manages and processing communications both for its local owner and remote devices 110. If AP 114 is scheduled to shut down one communication mode (e.g. WAN), it is possible that the other communication mode may still be maintained. An embodiment provides for spooling of messages for one or another mode. For example if AP 114 has its WAN connection selectively disengaged, then AP 114 would not receive voice and e-mail messages, intended for its user. However, communications through its Wi-Fi connection may not be affected. With such dual mode communications, when one communication channel is deactivated, messages provided on that channel may be stored (either at AP 114 or its related server) until the channel is reactivated and then such stored messages are forwarded. However, since the other channel has not been disconnected (e.g. a Wi-Fi connection) messages processed through that channel are still provided to the ultimate destination (e.g. the other remote device).

As such, the third feature of an example provides the following functions and/or benefits:
- Analysis of schedule information for AP 114 to identify a projected maximum duration of the current ESS and possible outage times for AP 114;
- Prior notification systems for AP 114 to notify devices 110 if another device 110 in the ESS cannot become a replacement AP 114 as the current AP winds down. The notification can be generated if an analysis of calendar information of devices 110 indicates that no device 110 can effectively become the replacement AP 114 for the time period required;
- Splitting of AP duties between two or more devices 110; and
- Differential processing of messages by AP 114, where messages addressed to the user of AP 114 are stored, while messages intended for devices 110 are transmitted thereto via a secondary protocol.

With aspects of the three main features of an example described, further detail is now provided on internal components in AP 114.

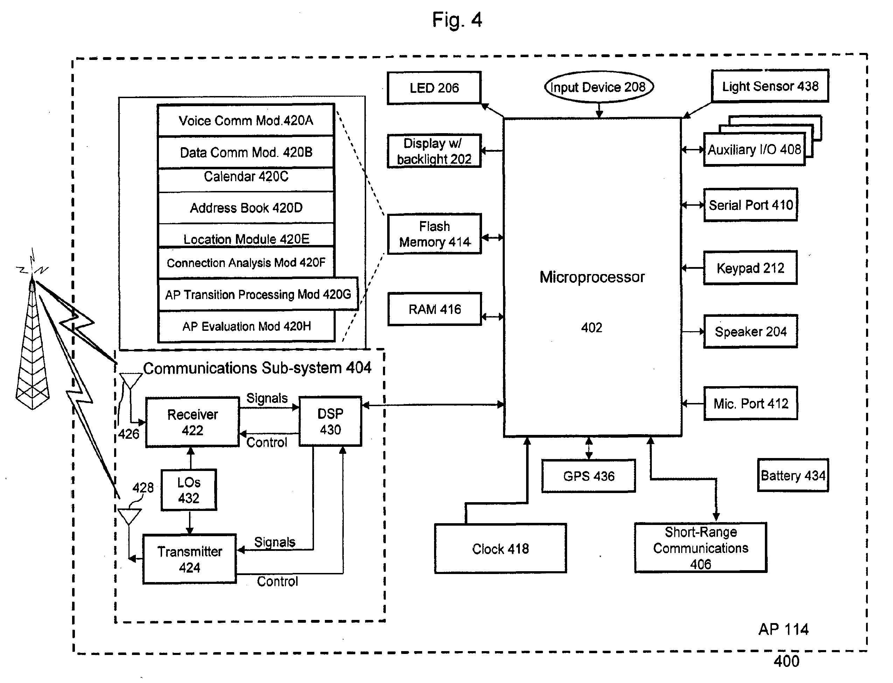

Referring to Fig. 4, functional components of AP 114 / device 110 are provided in schematic 400. The functional components are generally electronic, structural or electro-mechanical devices. In particular, microprocessor 402 is provided to control and receive almost all data, transmissions, inputs and outputs related to AP 114 / device 110. Microprocessor 402 is shown schematically as coupled to keypad 312 and other internal devices. Microprocessor 402 preferably controls the overall operation of AP 114 / device 110 and its components. Exemplary microprocessors for microprocessor 402 include microprocessors in the Data 950 (trade-mark) series, the 6200 series and the PXA900 series, all available at one time from Intel Corporation. Microprocessor 402 is connected to other elements in AP 114 / device 110 through a series of electrical connections to its various input and output pins. Microprocessor 402 has an IRQ input line which allows it to receive signals from various devices and modules. Appropriate interrupt firmware is provided which receives and reacts to the signals detected on the IRQ line. An interrupt signal may be used to indicate a request to terminate the segmented scanning mode of an embodiment. Microprocessor 402 is one type of processor that can be provided in AP 114 to execute instructions provided in its processes.

In addition to microprocessor 402, other internal devices of AP 114 /device 110 are shown schematically in Fig. 4. These include: display 202; speaker 204; keypad 212; communication sub-system 404; short-range communication sub-system 406; auxiliary I/O devices 408; serial port 410; microphone port 412 for microphone 216; flash memory 414 (which provides persistent storage of data); random access memory (RAM) 416; clock 418 and other device sub-systems (not shown). AP 114 is preferably a two-way radio frequency (RF) communication device having voice and data communication capabilities. In addition, AP 114 preferably has the capability to communicate with other computer systems via the Internet.

Operating system software executed by microprocessor 402 is preferably stored in a computer-readable medium, such as flash memory 414, but may be stored in other types of memory devices, such as read-only memory (ROM) or similar storage element. In addition, system software, specific device applications, or parts thereof, may be temporarily loaded into a volatile store, such as RAM 416. Communication signals received by the mobile device may also be stored to RAM 416.

In addition to an operating system operating on AP 114 / device 110, additional software modules 420 enable execution of software applications on AP 114 / device 110. A set of software (or firmware) applications, generally identified as applications 420, that control basic device operations, such as voice communication module 420A and data communication module 420B, may be installed on AP 114 / device 110 during manufacture or downloaded thereafter. As well, other software modules are provided, such as calendar module 420C, address book 420D and location module 420E.

Connection analysis module (CAM) 420F is software and/or firmware that controls how and when connections for potential clients for AP 114 are evaluated per Fig. 3A. Communications and data are streamed through either communication module 404 or 406. CAM 420F may also receive signals from other modules providing information to it on other modules that are using communication module 404 or 406.

AP transition processing module (ATPM) 420G is software and/or firmware that determines whether an AP transfer should be performed, per Fig. 3B. ATPM 420G may also receive signals from other modules providing information to it on other modules that are using communication module 404 or 406.

AP evaluation module (AEM) 420H is software and/or firmware that identifies circumstances when an AP is about to, or may be about to, terminate its connection to network 112, per Fig. 3C. AEM 420H may also receive signals from other modules providing information to it on other modules that are using communication module 404 or 406. Once AEM 420H makes a determination that a termination should be initiated, it can generate one or more messages for transmission to devices 110 notifying same, for processing and transmission by module 420B.

Messages received and/or generated by any module 420 may be processed by data communications module 420B. Messages may be transmitted/received in network layer communications, emails, and/or other messaging systems to network 112 and/or devices 110. Module 420B receives messages from external devices 110, extracts relevant information from them and provides the information to relevant modules (such as AEM 420H and ATPM 420F). Module 420B notifications from modules 420 (such as AEM 420H and ATPM 420F), extracts relevant information from them and generates and sends messages containing relevant information to the messages to network 112, including to devices 110. Messages relating to network 112 for device 110, when operating as an AP are processed separately by the modules from other non-network 112 communications (e.g. cellular communications) processed by device 110.

Additional modules such as personal information manager (PIM) application may be provided. Any module may be installed during manufacture or downloaded thereafter into AP 114 / device 110.

Data associated with each application, the status of one or more networks, profiles for networks and trigger conditions for commands for networks can be stored and updated in flash memory 414.

Communication functions, including data and voice communications, are performed through the communication sub-system 404 and the short-range communication sub-system 406. Collectively, sub-systems 404 and 406 provide the signal-level interface for all communication technologies processed by device 110. Various applications 420 provide the operational controls to further process and log the communications. Communication sub-system 404 includes receiver 422, transmitter 424 and one or more antennas, illustrated as receive antenna 426 and transmit antenna 428. In addition, communication sub-system 404 also includes processing modules, such as digital signal processor (DSP) 430 and local oscillators (LOs) 432. The specific design and implementation of communication sub-system 404 is dependent upon the communication network in which AP 114 / device 110 is intended to operate. For example, communication sub-system 404 of AP 114 / device 110 may operate with the Mobitex (trade-mark), DataTAC (trade-mark) or General Packet Radio Service (GPRS) mobile data communication networks and also operate with any of a variety of voice communication networks, such as 802.11 networks, Bluetooth networks, Advanced Mobile Phone Service (AMPS), Time Division Multiple Access (TDMA), Code Division Multiple Access (CDMA), CDMA 2000, Personal Communication Service (PCS), Global System for Mobile Communication (GSM), WWAN (cellular), WMAN (wi-max), WLAN (Wi-Fi), and WPAN (Bluetooth) in other disclosures, etc. Other types of data and voice (telephonic) networks, both separate and integrated, may also be utilized with AP 114 / device 110. In any event, communication sub-system 404 provides AP 114 / device 110 with the capability of communicating with other devices using various communication technologies, including instant messaging (IM) systems, text messaging (TM) systems and short message service (SMS) systems.

Short-range communication sub-system 406 enables communication between device 110 and other proximate systems or devices, which need not necessarily be similar devices. For example, the short-range communication sub-system may include an infrared device and associated circuits and components, a Wi-Fi or a Bluetooth (trade-mark) communication module to provide for communication with similarly enabled systems and devices. Sub-system 406 may have one or more inputs or outputs to sub-system 404 in processing signals for its networks.

In addition to processing communication signals, DSP 430 provides control of receiver 426 and transmitter 424. For example, gains applied to communication signals in receiver 426 and transmitter 424 may be adaptively controlled through automatic gain-control algorithms implemented in DSP 430. One particular operational aspect of receiver 422 and antenna 426 is that they need to be tuned to receive signals in the 802.11 network bands, e.g. signals in the 2.4 GHz to 5.8 GHz range for sub-systems 406 and if needed, sub-system 404. Additional filters on antenna may also be used to provide such functionality.

Receiver 422 and antenna 426 provide at least some of the hardware and software elements needed to detect when AP 114 / device 110 is in the presence of communication signals from networks 108 and 112, thereby enabling AP 114 / device 110 to communicate with other devices in networks 108 and 112.

Powering the entire electronics of the mobile handheld communication device is power source 434. In one embodiment, the power source 434 includes one or more batteries. In another embodiment, the power source 434 is a single battery pack, especially a rechargeable battery pack. A power switch (not shown) provides an "on/off" switch for AP 114 /device 110. A power source interface (not shown) may be provided in hardware, firmware, software or a combination of such elements to selectively control access of components in AP 114 / device 110 to power source 434. Upon activation of the power switch an application 420 is initiated to turn on device 110. Upon deactivation of the power switch, an application 420 is initiated to turn off device 110. Power to AP 114 / device 110 may also be controlled by other devices and by software applications 420.

AP 114 / device 110 may also have global positioning system 436 to assist in identifying a present location of device 110 and may also have light sensor 438 to provide data on the ambient light conditions for device 110.

Although an example has been described in terms of identifying/maintaining server/client device hierarchies in a wireless network, such as an 802.11 network, the features of an embodiment can be provided in coordinate aspects of different connections among different devices in different networks.

It will be appreciated that CAM 420F, ATPM 420G, AEM 420H and other modules in the embodiments can be implemented using known programming techniques, languages and algorithms. Although the modules described are implemented in AP 114, it will be appreciated that some functions of the modules may be provided in a separate server that is in communication with AP 114 and / or devices 110. The titles of the modules are provided as a convenience to provide labels and assign functions to certain modules. It is not required that each module perform only its functions as described above. As such, specific functionalities for each application may be moved between applications or separated into different applications. Modules may be contained within other modules. Different signalling techniques may be used to communicate information between applications using known programming techniques. Known data storage, access and update algorithms allow data to be shared between applications. It will further be appreciated that other applications and systems on device 110 may be executing concurrently with other modules. As such, any of modules 420 (or parts thereof) may be structured to operate in as a "background" application on AP 114, using programming techniques known in the art.

It will be appreciated that the examples relating to client devices, server devices and systems may be implemented in a combination of electronic hardware, firmware and software. The firmware and software may be implemented as a series of processes, applications and/or modules that provide the functionalities described herein. The algorithms and processes described herein may be executed in different order(s). Interrupt routines may be used. Data may be stored in volatile and non-volatile devices described herein and may be updated by the hardware, firmware and/or software.

As used herein, the wording "and / or" is intended to represent an inclusive-or. That is, "X and / or Y" is intended to mean X or Y or both.

In this disclosure, where a threshold or measured value is provided as an approximate value (for example, when the threshold is qualified with the word "about"), a range of values will be understood to be valid for that value. For example, for a threshold stated as an approximate value, a range of about 25% larger and 25% smaller than the stated value may be used. Thresholds, values, measurements and dimensions of features are illustrative of embodiments and are not limiting unless noted. Further, as an example, a "sufficient" match with a given threshold may be a value that is within the provided threshold, having regard to the approximate value applicable to the threshold and the understood range of values (over and under) that may be applied for that threshold.

The present disclosure is defined by the claims appended hereto, with the foregoing description being merely illustrative of examples of the disclosure. Those of ordinary skill may envisage certain modifications to the foregoing embodiments which, although not explicitly discussed herein, do not depart from the scope of the disclosure, as defined by the appended claims.

## Claims

1. A method (300) of selecting a replacement server device for a wireless server device managing communications for a wireless network (112), the method comprising:
identifying (302) a set of wireless devices (110) that are communicating in the wireless network (112); and
when the wireless server device is determined to be disconnecting from the wireless network (112) identifying (306) a set of client devices in the set of wireless devices (110) that communicate with the wireless network (112) from which the replacement server device is selected to replace the wireless server device by evaluating network (112) communication characteristics of members in the set of client devices (110) against at least one of battery level and communication bandwidth capacities of the wireless server device.

2. The method (300) of selecting a replacement server device for a wireless server device managing communications for a wireless network (112) as claimed in claim 1, wherein:
the communication characteristics include communication capabilities of the members in the set of client devices (110) with another network.

3. The method (300) of selecting a replacement server device for a wireless server device managing communications for a wireless network (112) as claimed in claim 1 or claim 2, wherein the wireless server device is determined to be disconnecting from the wireless network (112) by evaluating calendar application data associated with the wireless server device.

4. The method (300) of selecting a replacement server device for a wireless server device managing communications for a wireless network (112) as claimed in any one of claims 1 to 3, wherein the replacement server device has less reconnection events to the wireless network (112) than the other client devices in the set of client devices.

5. The method (300) of selecting a replacement server device for a wireless server device managing communications for a wireless network (112) as claimed in any one of claims 1 to 4, wherein before terminating the wireless network (112) the wireless server device sends a notification to the set of client devices indicating that the wireless server device is terminating the wireless network (112).

6. The method (300) of selecting a replacement server device for a wireless server device managing communications for a wireless network (112) as claimed in claim 5, wherein:
the notification includes operating parameters and connection information about the wireless server device.

7. The method (300) of selecting a replacement server device for a wireless server device managing communications for a wireless network (112) as claimed in claim 5 or claim 6, wherein:
the notification includes a message indicating an intent to leave the wireless network (112) as an access point by the wireless server device.

8. The method (300) of selecting a replacement server device for a wireless server device managing communications for a wireless network (112) as claimed in any one of claims 1 to 7, further comprising:
categorizing the set of client devices into a plurality of groups, wherein each group of the plurality of groups contains members of the set of client devices that have a common parameter.

9. The method (300) of selecting a replacement server device for a wireless server device managing communications for a wireless network (112) as claimed in claim 8, wherein:
one group of the plurality of groups contains members of the set of client devices that are allowed to connect to the wireless network (112) regardless of their communication characteristics.

10. The method (300) of selecting a replacement server device for a wireless server device managing communications for a wireless network (112) as claimed in claim 8 or claim 9, wherein the plurality of groups are categorized based on an amount of data to be transferred between the set of client devices and the wireless server device.

11. The method (300) of selecting a replacement server device for a wireless server device managing communications for a wireless network (112) as claimed in any one of claims 8 to 10, wherein the plurality of groups are categorized based on a transmission distance between the set of client devices and the wireless server device.

12. The method (300) of selecting a replacement server device for a wireless server device managing communications for a wireless network (112) as claimed in any one of claims 1 to 11, wherein the wireless network (112) is an 802.11-class network.

13. A wireless server device for processing communications directed to the wireless server device and to other wireless devices in a wireless network (112), the wireless server device comprising:
a communication module (404, 406) to process communications with a plurality of wireless devices communicating with the wireless server device through the wireless network (112);
an evaluation module (420H) to identify when the wireless server device will be disconnecting from the wireless network (112); and
a connection analysis module (420F) to identify a set of client devices in the plurality of wireless devices; the connection analysis module (420F) being adapted to perform the steps of a method as claimed in any one of claims 1 to 12.

## Patentansprüche

1. Verfahren (300) zum Auswählen einer Ersatzservervorrichtung für eine Drahtlosservervorrichtung, die Kommunikationen für ein Drahtlosnetz (112) verwaltet, wobei das Verfahren Folgendes aufweist:
Identifizieren (302) einer Menge von Drahtlosvorrichtungen (110), die in dem Drahtlosnetz (112) kommunizieren, und
Identifizieren (306) einer Menge von Clientvorrichtungen in der Menge von Drahtlosvorrichtungen (iio), wenn bestimmt wird, dass sich die Drahtlosservervorrichtung gerade von dem Drahtlosnetz (112) trennt, wobei die Drahtlosvorrichtungen mit dem Drahtlosnetz (112) kommunizieren, woraus die Ersatzservervorrichtung ausgewählt wird, um die Drahtlosservervorrichtung zu ersetzen, indem Netz- (112) Kommunikationseigenschaften von Teilnehmern der Menge von Clientvorrichtungen (110) in Bezug auf mindestens eines aus einem Batteriezustand und Kommunikationsbandbreitenkapazitäten der Drahtlosservervorrichtung evaluiert werden.

2. Verfahren (300) zum Auswählen einer Ersatzservervorrichtung für eine Drahtlosservervorrichtung, die Kommunikationen für ein Drahtlosnetz (112) verwaltet, nach Anspruch 1, wobei:
die Kommunikationseigenschaften Kommunikationsfähigkeiten der Teilnehmer der Menge von Clientvorrichtungen (110) mit anderen Netzen enthalten.

3. Verfahren (300) zum Auswählen einer Ersatzservervorrichtung für eine Drahtlosservervorrichtung, die Kommunikationen für ein Drahtlosnetz (112) verwaltet, nach Anspruch 1 oder 2, wobei bestimmt wird, dass sich die Drahtlosservervorrichtung gerade von dem Drahtlosnetz (112) trennt, indem Kalenderanwendungsdaten, die mit der Drahtlosservervorrichtung verknüpft sind, evaluiert werden.

4. Verfahren (300) zum Auswählen einer Ersatzservervorrichtung für eine Drahtlosservervorrichtung, die Kommunikationen für ein Drahtlosnetz (112) verwaltet, nach einem der Ansprüche 1 bis 3, wobei die Ersatzservervorrichtung weniger Wiederverbindungsereignisse an das Drahtlosnetz (112) als die anderen Clientvorrichtungen in der Menge von Clientvorrichtungen aufweist.

5. Verfahren (300) zum Auswählen einer Ersatzservervorrichtung für eine Drahtlosservervorrichtung, die Kommunikationen für ein Drahtlosnetz (112) verwaltet, nach einem der Ansprüche 1 bis 4, wobei vor Auflösen des Drahtlosnetzes (112) die Drahtlosservervorrichtung eine Mitteilung an die Menge von Clientvorrichtungen sendet, die angibt, dass die Drahtlosservervorrichtung das Drahtlosnetz (112) auflöst.

6. Verfahren (300) zum Auswählen einer Ersatzservervorrichtung für eine Drahtlosservervorrichtung, die Kommunikationen für ein Drahtlosnetz (112) verwaltet, nach Anspruch 5, wobei:
die Mitteilung Betriebsparameter und Verbindungsinformation über die Drahtlosservervorrichtung enthält.

7. Verfahren (300) zum Auswählen einer Ersatzservervorrichtung für eine Drahtlosservervorrichtung, die Kommunikationen für ein Drahtlosnetz (112) verwaltet, nach Anspruch 5 oder 6, wobei:
die Mitteilung eine Nachricht aufweist, die eine Absicht von der Drahtlosservervorrichtung angibt, als Zugangspunkt das Drahtlosnetz (112) zu verlassen.

8. Verfahren (300) zum Auswählen einer Ersatzservervorrichtung für eine Drahtlosservervorrichtung, die Kommunikationen für ein Drahtlosnetz (112) verwaltet, nach einem der Ansprüche 1 bis 7, ferner mit:
Kategorisieren der Menge von Clientvorrichtungen in eine Vielzahl von Gruppen, wobei jede Gruppe der Vielzahl von Gruppen Teilnehmer der Menge von Clientvorrichtungen aufweist, die einen gemeinsamen Parameter aufweisen.

9. Verfahren (300) zum Auswählen einer Ersatzservervorrichtung für eine Drahtlosservervorrichtung, die Kommunikationen für ein Drahtlosnetz (112) verwaltet, nach Anspruch 8, wobei:
eine Gruppe der Vielzahl von Gruppen Teilnehmer der Menge von Clientvorrichtungen aufweist, denen erlaubt ist, sich ohne Rücksicht auf ihre Kommunikationseigenschaften mit dem Drahtlosnetz (112) zu verbinden.

10. Verfahren (300) zum Auswählen einer Ersatzservervorrichtung für eine Drahtlosservervorrichtung, die Kommunikationen für ein Drahtlosnetz (112) verwaltet, nach Anspruch 8 oder 9, wobei die Vielzahl von Gruppen aufgrund einer Menge von Daten kategorisiert wird, die zwischen der Menge von Clientvorrichtungen und der Drahtlosservervorrichtung zu übertragen sind.

11. Verfahren (300) zum Auswählen einer Ersatzservervorrichtung für eine Drahtlosservervorrichtung, die Kommunikationen für ein Drahtlosnetz (112) verwaltet, nach einem der Ansprüche 8 bis 10, wobei die Vielzahl von Gruppen aufgrund einer Übertragungsentfernung zwischen der Menge von Clientvorrichtungen und der Drahtlosservervorrichtung kategorisiert wird.

12. Verfahren (300) zum Auswählen einer Ersatzservervorrichtung für eine Drahtlosservervorrichtung, die Kommunikationen für ein Drahtlosnetz (112) verwaltet, nach einem der Ansprüche 1 bis 11, wobei das Drahtlosnetz (112) ein Netz einer Klasse 802.11 ist.

13. Drahtlosservervorrichtung zum Verarbeiten von Kommunikationen, die an die Drahtlosservervorrichtung und an andere Drahtlosvorrichtungen in einem Drahtlosnetz (112) gerichtet sind, wobei die Drahtlosservervorrichtung Folgendes aufweist:
ein Kommunikationsmodul (404, 406), um Kommunikationen mit einer Vielzahl von Drahtlosvorrichtungen zu verarbeiten, die mit der Drahtlosservervorrichtung über das Drahtlosnetz (112) kommunizieren,
ein Evaluationsmodul (420H), um zu identifizieren, wann sich die Drahtlosservervorrichtung von dem Drahtlosnetz (112) trennen wird, und
ein Verbindungsanalysemodul (420F), um eine Menge von Clientvorrichtungen der Vielzahl von Drahtlosvorrichtungen zu identifizieren, wobei das Verbindungsanalysemodul (420F) angepasst ist, die Schritte eines Verfahrens nach einem der Ansprüche 1 bis 12 durchzuführen.

## Revendications

1. Procédé (300) de sélection d'un dispositif serveur de remplacement pour un dispositif serveur sans fil gérant des communications pour un réseau sans fil (112), le procédé comprenant les étapes consistant à :
identifier (302) un ensemble de dispositifs sans fil (110) qui sont en cours de communication sur le réseau sans fil (112) ; et
lorsqu'il est déterminé que le dispositif serveur sans fil se déconnecte du réseau sans fil (112), identifier (306) un ensemble de dispositifs clients, dans l'ensemble de dispositifs sans fil (110) qui communique avec le réseau sans fil (112), au sein duquel le dispositif serveur de remplacement est sélectionné pour remplacer le dispositif serveur sans fil en évaluant des caractéristiques de communication sur réseau (112) de membres de l'ensemble de dispositifs clients (110) par rapport à au moins un paramètre parmi un niveau de batterie et des capacités de bande passante de communication du dispositif serveur sans fil.

2. Procédé (300) de sélection d'un dispositif serveur de remplacement pour un dispositif serveur sans fil gérant des communications pour un réseau sans fil (112) selon la revendication 1, dans lequel :
les caractéristiques de communication comprennent des capacités de communication des éléments de l'ensemble de dispositifs clients (110) avec un autre réseau.

3. Procédé (300) de sélection d'un dispositif serveur de remplacement pour un dispositif serveur sans fil gérant des communications pour un réseau sans fil (112) selon la revendication 1 ou la revendication 2, dans lequel il est déterminé que le dispositif serveur sans fil se déconnecte du réseau sans fil (112) en évaluant des données d'une application d'agenda associée au dispositif serveur sans fil.

4. Procédé (300) de sélection d'un dispositif serveur de remplacement pour un dispositif serveur sans fil gérant des communications pour un réseau sans fil (112) selon l'une des revendications 1 à 3, dans lequel le dispositif serveur de remplacement compte moins d'événements de reconnexion au réseau sans fil (112) que les autres dispositifs clients dans l'ensemble de dispositifs clients.

5. Procédé (300) de sélection d'un dispositif serveur de remplacement pour un dispositif serveur sans fil gérant des communications pour un réseau sans fil (112) selon l'une des revendications 1 à 4, dans lequel, avant de fermer le réseau sans fil (112), le dispositif serveur sans fil envoie une notification à l'ensemble de dispositifs clients qui indique que le dispositif serveur sans fil ferme le réseau sans fil (112).

6. Procédé (300) de sélection d'un dispositif serveur de remplacement pour un dispositif serveur sans fil gérant des communications pour un réseau sans fil (112) selon la revendication 5, dans lequel :
la notification comprend des paramètres de fonctionnement et des informations de connexion intéressant le dispositif serveur sans fil.

7. Procédé (300) de sélection d'un dispositif serveur de remplacement pour un dispositif serveur sans fil gérant des communications pour un réseau sans fil (112) selon la revendication 5 ou la revendication 6, dans lequel :
la notification comprend un message indiquant une intention de quitter le réseau sans fil (112) comme point d'accès par le dispositif serveur sans fil.

8. Procédé (300) de sélection d'un dispositif serveur de remplacement pour un dispositif serveur sans fil gérant des communications pour un réseau sans fil (112) selon l'une des revendications 1 à 7, comprenant en outre l'étape consistant à :
classer l'ensemble de dispositifs clients en une pluralité de groupes, chaque groupe, dans la pluralité de groupes, comprenant des éléments de l'ensemble de dispositifs clients qui ont un paramètre commun.

9. Procédé (300) de sélection d'un dispositif serveur de remplacement pour un dispositif serveur sans fil gérant des communications pour un réseau sans fil (112) selon la revendication 8, dans lequel :
un groupe parmi la pluralité de groupes contient des éléments de l'ensemble de dispositifs clients qui sont autorisés à se connecter au réseau sans fil (112) quelles que soient leur caractéristiques de communication.

10. Procédé (300) de sélection d'un dispositif serveur de remplacement pour un dispositif serveur sans fil gérant des communications pour un réseau sans fil (112) selon la revendication 8 ou la revendication 9, dans lequel la pluralité de groupes est classée en fonction d'une quantité de données à transférer entre l'ensemble de dispositifs clients et le dispositif serveur sans fil.

11. Procédé (300) de sélection d'un dispositif serveur de remplacement pour un dispositif serveur sans fil gérant des communications pour un réseau sans fil (112) selon l'une des revendications 8 à 10, dans lequel la pluralité de groupes est classée en fonction d'une distance de transmission entre l'ensemble de dispositifs clients et le dispositif serveur sans fil.

12. Procédé (300) de sélection d'un dispositif serveur de remplacement pour un dispositif serveur sans fil gérant des communications pour un réseau sans fil (112) selon l'une des revendications 1 à 11, dans lequel le réseau sans fil (112) est un réseau de la classe 802.11.

13. Dispositif serveur sans fil destiné à traiter des communications avec une pluralité de dispositifs sans fil communiquant avec le dispositif serveur sans fil via un réseau sans fil (112), le dispositif serveur sans fil comprenant :
un module de communication (404, 406) destiné à traiter des communications avec une pluralité de dispositifs sans fil communiquant avec le dispositif serveur sans fil via le réseau sans fil (112) ;
un module d'évaluation (420H) destiné à identifier le moment où le dispositif serveur sans fil se déconnectera du réseau sans fil (112) ; et
un module d'analyse des connexions (420F) destiné à identifier un ensemble de dispositifs clients dans la pluralité de dispositifs sans fil, le module d'analyse des connexions (420F) étant conçu pour exécuter les étapes d'un procédé selon l'une quelconque des revendications 1 à 12.
